# EUROPÄISCHE PATENTSCHRIFT

(11) **EP 2 823 154 B1**
(45) Veröffentlichungstag und Bekanntmachung des Hinweises auf die Patenterteilung: **10.10.2018**
(21) Anmeldenummer: 13723737.6
(22) Anmeldetag: 14.05.2013
(51) Int. Cl.: F01D 9/06

(54) **KÜHLMITTELÜBERBRÜCKUNGSLEITUNG, ZUGEHÖRIGE TURBINENSCHAUFEL, GASTURBINE UND KRAFTWERKSANLAGE**
COOLANT BRIDGING LINE, CORRESPONDING TURBINE VANE, GAS TURBINE AND POWER PLANT
CONDUIT DE PONTAGE POUR FLUIDE DE REFROIDISSEMENT, AUBE STATORIQUE, TURBINE À GAZ ET CENTRALE ÉNERGÉTIQUE ASSOCIÉES

(30) Priorität: 06.06.2012 DE 102012209549
(43) Veröffentlichungstag der Anmeldung: 14.01.2015
(73) Patentinhaber: Siemens Aktiengesellschaft, 80333 München (DE)
(72) Erfinder: AHMAD, Fathi, 41564 Kaarst (DE)
(86) Internationale Anmeldenummer: PCT/EP2013/059859
(87) Internationale Veröffentlichungsnummer: WO 2013/182381

(56) Entgegenhaltungen:
- EP-A1- 0 543 627
- EP-A1- 1 783 326
- GB-A- 1 555 587

## Beschreibung

Die Erfindung betrifft eine in eine hohle, gekühlte Turbinenschaufel einsetzbare Kühlmittelüberbrückungsleitung für eine Gasturbine mit durch eine Wandung getrennte Innen- und Außenseiten, wobei sich die Kühlmittelüberbrückungsleitung von einem ersten Bauteil der Gasturbine zu einem zweiten Bauteil der Gasturbine erstreckt.

Eine Gasturbine ist eine Strömungsmaschine, in der ein unter Druck stehendes Gas expandiert. Sie besteht aus einer Turbine oder Expander, einem vorgeschalteten Verdichter und einer dazwischengeschalteten Brennkammer. Die Gesamtheit der Schaufeln des Verdichters und der Turbine wird dabei als Beschaufelung bezeichnet. Unterschieden wird dabei zwischen Lauf- und Leitschaufeln. Ein Kranz von Laufschaufeln mit dem zugehörigen Kranz von Leitschaufeln nennt man eine Stufe. Die Beschaufelung von Turbine oder Verdichter ist üblicherweise mehrstufig.

Die Leitschaufeln sind fest im Gehäuse des Verdichters bzw. der Turbine eingebaut und leiten das Arbeitsmittel (Ansaugluft oder Heißgas) im optimalen Winkel auf die Laufschaufeln, die sich auf drehbaren Wellen befinden. Über die Laufschaufeln findet die Kopplung der mechanisch nutzbaren Leistung zwischen Maschine und Fluid statt. Derartige Leitschaufeln sind beispielsweise aus der GB 1555587 A bekannt
Das Wirkungsprinzip beruht dabei auf dem Kreisprozess (Joule-Prozess): Dieser komprimiert über die Beschaufelung einer oder mehrerer Verdichterstufen Luft, mischt diese anschließend in der Brennkammer mit einem gasförmigen oder flüssigen Treibstoff, zündet und verbrennt. Außerdem wird die Luft zur Kühlung insbesondere thermisch stark beanspruchter Bauteile eingesetzt.

So entsteht ein Heißgas (Mischung aus Verbrennungsgas und Luft), das im nachfolgenden Turbinenteil entspannt, wobei sich thermische in mechanische Energie umwandelt und zunächst den Verdichter antreibt. Der verbleibende Anteil wird beim Wellentriebwerk zum Antrieb eines Generators, eines Propellers oder anderen rotierenden Verbrauchern verwendet. Beim Strahltriebwerk dagegen beschleunigt die thermische Energie den heißen Gasstrom, was den Schub erzeugt.

Bauteile von Gasturbinen sind durch das Heißgas thermisch hoch beansprucht. Eine Erhöhung der Betriebstemperaturen ist auch erwünscht, da sich so bessere Wirkungsgrade erzielen lassen. Damit die Materialtemperaturen nicht die Festigkeitsgrenzen überschreiten, ist daher eine Zuführung von Kühlmittel, beispielsweise Luft, vorgesehen. Auf dem Weg zum vorgesehenen Einsatzort des Kühlmittels wird dieses jedoch durch die hohen Temperaturen bereits erwärmt. Diese Erwärmung kann unter Umständen so groß sein, dass die vorgesehene Kühlwirkung des Kühlmittels am Einsatzort zu gering ist. Dies erhöht die thermische Belastung und reduziert somit die Lebensdauer des Bauteils am Einsatzort. In diesem Fall wird das Kühlmittel daher häufig in separaten Kühlmittelüberbrückungsleitungen geführt. Alternativ dazu ist es aus der besagten GB 1555587 A bekannt, eine Überbrückungsleitung zur Durchleitung von Öl durch eine Turbinenschaufel hindurch zu nutzen.

Weiter ist es aus der EP 0 543 627 A1 bekannt, zur Prallkühlung einer Turbinenschaufel vorgesehene Kühlluft im Inneren der Turbinenschaufel zu kühlen, indem darin eine Dampfleitung durchgeführt wird. Dazu weist die Dampfleitung an ihrer von der Kühlluft überstreichbaren Oberfläche Turbulatoren auf, um den Wärmeübergang anzufachen. Diese Art der Kühlluftkühlung erscheint jedoch äußerst aufwändig zu sein.

Der Erfindung liegt nunmehr die Aufgabe zugrunde, eine Kühlmittelüberbrückungsleitung anzugeben, die eine weitere Erhöhung der Lebensdauer der Bauteile der Gasturbine bei dennoch möglichst hohem Wirkungsgrad ermöglicht.

Die vorliegende Erfindung wird in den beigefügten Ansprüchen definiert.

Diese Aufgabe wird erfindungsgemäß gelöst, indem die in eine hohle, gekühlte Turbinenschaufel einsetzbare Kühlmittelüberbrückungsleitung Mittel aufweist, die die Wärmeübertragung zwischen und/oder die Strömungsverhältnisse an Innen- und Außenseite verändern.

Die Erfindung geht dabei von der Überlegung aus, dass die Aufheizung des Kühlmittels durch Wechselwirkung mit dem umgebenden Bauteil eine Lebensdauersenkung zur Folge hat. Hierbei hat sich überraschend herausgestellt, dass die eingesetzten Kühlmittelüberbrückungsleitungen bislang in keinster Weise zur Verbesserung von Lebensdauer bei gleichbleibendem Wirkungsgrad genutzt werden. Daher sollten die in eine hohle, gekühlte Turbinenschaufel einsetzbaren Kühlmittelüberbrückungsleitungen Mittel aufweisen, die die Wärmeübertragung zwischen Innen- und Außenseite der Leitung verändern und vorzugsweise auch die Strömungsverhältnisse innerhalb oder außerhalb der Wandung verändern, um hier eine Verbesserung zu erreichen. Erfindungsgemäß umfassen die Mittel dazu eine Beschichtung, die weiter ein keramisches Material umfasst. Damit wird weniger Wärmeenergie in die Kühlmittelüberbrückungsleitung eingetragen, da die Wechselwirkung zwischen dem im Innenraum transportierten Kühlmittel und der Umgebung reduziert wird. Dies verbessert die Kühlwirkung des Kühlmittels am Einsatzort, da die Effizienz des Kühlmitteltransports erhöht wird.

Vorteilhafterweise ist die Kühlmittelüberbrückungsleitung dabei innerhalb einer Leitschaufel der Gasturbine eingesetzt. Weiterhin ist das erste und/oder das zweite Bauteil, zwischen denen sich die Kühlmittelüberbrückungsleitung erstreckt, jeweils ein Schaufelfuß bzw. ein Schaufelkopf. Die Kühlmittelzufuhr zum inneren Ring, an dem die Leitschaufelköpfe befestigt sind, ist nämlich durch die Leitschaufeln besonders vorteilhaft, da die Wege besonders kurz sind. Jedoch ist gerade zwischen Leitschaufelfuß und Leitschaufelkopf die thermische Belastung des durchzuführenden, nach Möglichkeit aber nicht aufzuheizenden Kühlmittels besonders stark. Deshalb sollten bei der Durchleitung des Kühlmittels vom Leitschaufelfuß am Außendurchmesser eines Leitschaufelrings zum Leitschaufelkopf am Innendurchmesser des Leitschaufelrings die Leitschaufeln mit Kühlmittelüberbrückungsleitungen ausgestattet werden.

In vorteilhafter Ausgestaltung sind die an der Kühlmittelüberbrückungsleitung vorgesehenen Mittel derart ausgelegt, dass sie die Wärmeleitung zwischen Innen- und Außenseite verändern, d. h. eine Enthalpieübertragung nicht notwendigerweise mittels Konvektion erfolgen muss.

In alternativer oder zusätzlicher Ausgestaltung umfassen die Mittel Turbulatoren. Dies ist insbesondere dann von Vorteil, wenn einige zu kühlende Bauteile einen übermäßigen Kühlmittelverbrauch verursachen. Ein derartiger übermäßiger Verbrauch reduziert nämlich den Wirkungsgrad der gesamten Gasturbine. Mit der Hilfe von Turbulatoren, die an der Innenseite der Wandung der Kühlmittelüberbrückungsleitung angeordnet sind, werden Verwirbelungen erzeugt, so dass der Rohrwiderstand in der Leitung steigt und damit der Druckverlust erhöht wird. Alternativ oder zusätzlich können auch Turbulatoren an der Außenseite der Kühlmittelüberbrückungsleitung angebracht werden. Dies stellt ebenfalls eine Möglichkeit zur Erhöhung der Auslegungsflexibilität dar. Da derartige Turbulatoren an der Außenseite den Wärmeeintrag in das im Inneren der Überbrückungsleitung fließende Kühlmittel erhöhen, ist diese Variante vorteilhaft mit der Beschichtung kombinierbar.

In weiterer vorteilhafter Ausgestaltung umfassen die Mittel eine Anzahl von Öffnungen in der Wandung der Kühlmittelüberbrückungsleitung. Eine derartige Ausgestaltung bietet besondere Vorteile, wenn Bauteile im Bereich der Kühlmittelleitung während des Betriebs eine hohe Wärmebelastung aufweisen. Gerade wenn eine übermäßige Wärmebelastung erst während des laufenden Betriebs der Gasturbine, d. h. nach der Konstruktionsphase festgestellt wird, sind umfangreiche bauliche Änderungen häufig mit hohen Kosten und technischem Aufwand verbunden. Hier kann durch Einbringen von Öffnungen in die Kühlmittelüberbrückungsleitung schnell und kostengünstig Abhilfe geschaffen werden, da direkt in betroffenen Bereichen Kühlmittel aus der Überbrückungsleitung als Prallkühlmittel auf das betroffene Bauteil gelangt.

Gemäß einer weiteren vorteilhaften Ausgestaltung ist als Mittel zur Veränderung der Wärmeübertragung die Wandung hohl ausgebildet ist. Durch diese auch als doppelwandige Konstruktion zu bezeichnende Ausgestaltung wird eine Wärmeleitung von der Außenseite zur Innenseite weiter reduziert, was beim bestimmungsgemäßen Einsatz der Kühlmittelüberbrückungsleitung in einer heißeren Umgebung den Wärmeeintrag in das entlang der Innenseite strömenden Kühlmittel vergleichsweise gering hält. Vorzugsweise ist dabei der Hohlraum der Wandung gegenüber der Innenseite und der Außenseite hermetisch gekapselt, so dass ein Austausch oder gar Vermischung von heißerem, äußerem Medium mit dem Hohlraummedium verhindert wird. Damit führt die Kapselung zu einer begrenzten Wärmeleitfähigkeit des Hohlraummediums. Weiter bevorzugt herrscht im Hohlraum ein Unterdruck im Bezug auf einen durchschnittlichen atmosphärischen Druck. Je geringer der Hohlraumdruck ist, also je mehr Medium dem Hohlraum vor seiner Kapselung entzogen wurde, umso geringer ist dessen Wärmeleitfähigkeit, was sich auf das entlang der Innenseite strömende Kühlmittel temperaturerhaltender auswirkt.

Aus praktischen Gründen ist die Kühlmittelüberbrückungsleitung rohrförmig ausgebildet, ggf. als sogar als doppelwandiges Rohr.

Eine Gasturbine weist vorteilhafterweise eine beschriebene Kühlmittelüberbrückungsleitung auf und ist vorteilhafterweise Bestandteil einer Kraftwerksanlage.

Die mit der Erfindung verbundenen Vorteile bestehen insbesondere darin, dass durch die Modifikation der Kühlmittelüberbrückungsleitungen hinsichtlich ihrer thermischen und strömungsmechanischen Eigenschaften eine flexible Anpassung an sich im Betrieb einstellende Temperaturverteilungen innerhalb einer Gasturbine möglich wird. Durch derartige Modifikationen sind schnelle Problemlösungen beispielsweise bei zu hohen erreichten Temperaturen an einzelnen Bauteilen möglich. Die Kühlmittelüberbrückungsleitung wird dabei in der Art einer Doppelnutzung sowohl für den Kühlmitteltransport als auch für die Kühlung und oder die Druckverluststeuerung im Kühlsystem genutzt.

Die Erfindung wird anhand einer Zeichnung näher erläutert. Darin zeigen:
- FIG 1: eine Kühlmittelüberbrückungsleitung mit außen angeordneten, ringförmigen Turbulatoren,
- FIG 2: eine Kühlmittelüberbrückungsleitung mit außen angeordneten, schraubenförmigen Turbulatoren,
- FIG 3: einen Teilschnitt durch die Stirnseite einer Turbinenschaufel,
- FIG 4: ein Schnitt durch eine doppelwandige Kühlmittelüberbrückungsleitung und
- FIG 5: einen Schnitt durch eine Gasturbine.

Gleiche Teile sind in allen FIGs mit denselben Bezugszeichen versehen.

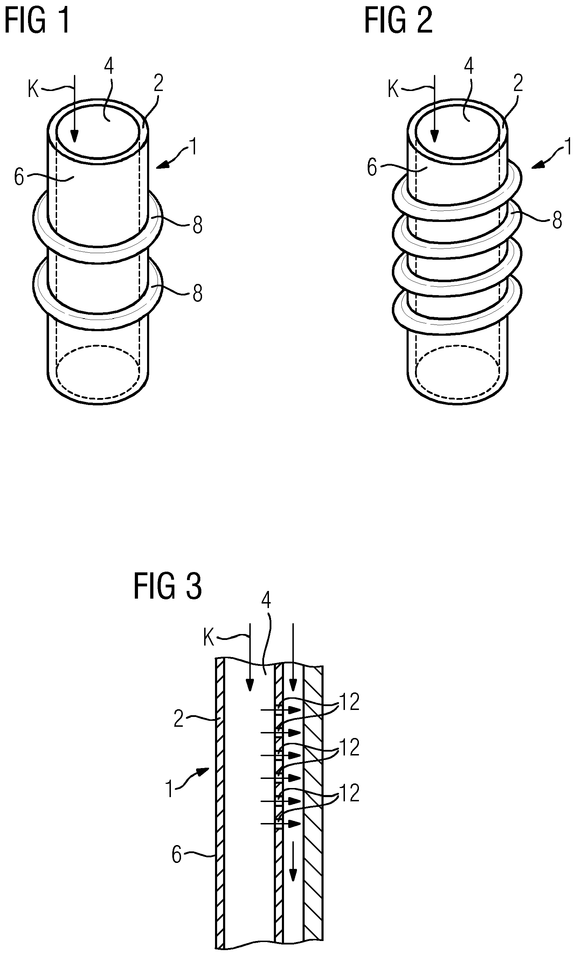

Die FIG 1 zeigt eine zylinderförmige Kühlmittelüberbrückungsleitung 1. Diese ist in einer hohlen, gekühlten Turbinenleitschaufel (nicht dargestellt) eingesetzt und erstreckt sich zwischen den Schaufelfüßen der Turbinenleitschaufel. Die Kühlmittelüberbrückungsleitung 1 weist eine Wandung 2 auf, die Innenseite 4 und Außenseite 6 der Kühlmittelüberbrückungsleitung 1 trennt. Innerhalb der Kühlmittelüberbrückungsleitung 1 wird Kühlmittel K, im Ausführungsbeispiel Luft, geführt.

An der Außenseite 6 sind ringförmige Turbulatoren 8 angeordnet. Im alternativen Ausführungsbeispiel nach der FIG 2 sind die Turbulatoren 8 hingegen schraubenförmig angeordnet. Ebenso können nicht näher gezeigte Turbulatoren an der Innenseite der Kühlmittelüberbrückungsleitung 1 angeordnet sein. Die Kühlmittelüberbrückungsleitungen nach den FIGs 1 und 2 sind zudem mit einer keramischen Beschichtung versehen.

FIG 3 zeigt eine Kühlmittelüberbrückungsleitung 1 zusammen mit der benachbarten Stirnseite 10 der Leitschaufel, in der sie eingebracht ist. Die Stirnseite 10 ist vergleichsweise stark thermisch belastet. Daher sind in die Kühlmittelüberbrückungsleitung 1 Öffnungen 12 eingebracht, durch die Kühlmittel K austritt und in der Art einer Prallkühlung auf die Innenseite der Stirnseite 12 strömt. Dadurch wird die Stirnseite 12 gekühlt.

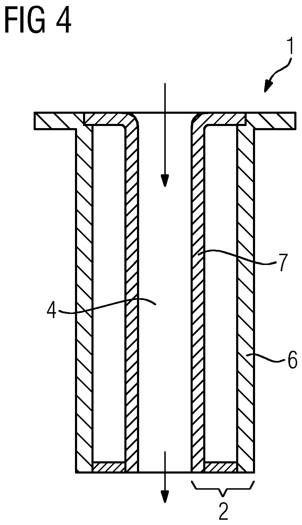

Die FIG 4 zeigt erneut eine zylinderförmige, also rohrförmige Kühlmittelüberbrückungsleitung 1. Auch diese ist im Inneren einer Turbinenleitschaufel (nicht dargestellt) angeordnet und erstreckt sich vom Schaufelfuß über das Schaufelblatt bis hin zum Schaufelkopf. Die Kühlmittelüberbrückungsleitung 1 weist im Unterschied zu FIG 1 eine hohle Wandung 2 zwischen ihrer Innenseite 4 und Außenseite 6 auf. Somit ist die Wandung 2 doppelwandig mit einem Hohlraum 7 ausgestattet. Der Hohlraum 7 kann dabei von Innenseite 4 und/oder der Außenseite 6 getrennt sein. Bei einer hermetischen Trennung des Hohlraums 7 von den auch durch die Innenseite 4 und/oder auch die Außenseite 6 begrenzten Räumen bietet es sich zur Verminderung der Wärmeleitung an, den Hohlraum 7 zumindest teilweise zu evakuieren. Damit kann der Wärmeeintrag von Außen auf das innerhalb der Kühlmittelüberbrückungsleitung 1 strömende Kühlmittel K besonders gering gehalten werden.

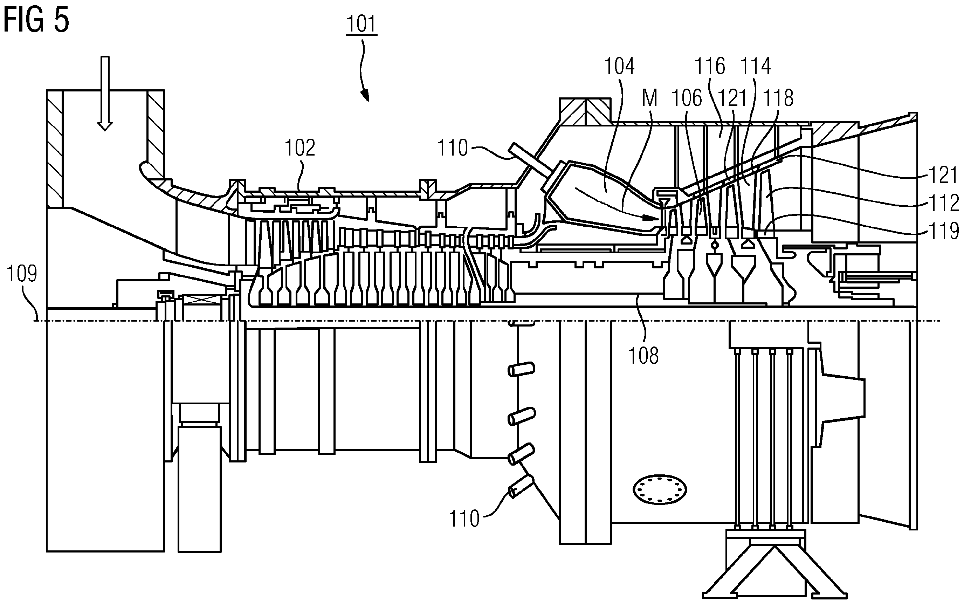

Die beschriebenen Kühlmittelüberbrückungsleitungen kommen in einer Gasturbine 101 nach FIG 5 zum Einsatz. Die Gasturbine 101 ist für den Einsatz in einem Kraftwerk zur Erzeugung von elektrischem Strom bestimmt.

Eine Gasturbine 101, wie in FIG 5 dargestellt, weist einen Verdichter 102 für Verbrennungsluft, eine Brennkammer 104 sowie eine Turbineneinheit 106 zum Antrieb des Verdichters 102 und eines nicht dargestellten Generators oder einer Arbeitsmaschine auf. Dazu sind die Turbineneinheit 106 und der Verdichter 102 auf einer gemeinsamen, auch als Turbinenläufer bezeichneten Turbinenwelle 108 angeordnet, mit der auch der Generator bzw. die Arbeitsmaschine verbunden ist, und die um ihre Mittelachse 109 drehbar gelagert ist. Diese Einheiten bilden den Rotor der Gasturbine 101. Die in der Art einer Ringbrennkammer ausgeführte Brennkammer 104 ist mit einer Anzahl von Brennern 110 zur Verbrennung eines flüssigen oder gasförmigen Brennstoffs bestückt.

Die Turbineneinheit 106 weist eine Anzahl von mit der Turbinenwelle 108 verbundenen, rotierbaren Laufschaufeln 112 auf. Die Laufschaufeln 112 sind kranzförmig an der Turbinenwelle 108 angeordnet und bilden somit eine Anzahl von Laufschaufelkränzen oder -reihen. Weiterhin umfasst die Turbineneinheit 106 eine Anzahl von feststehenden Leitschaufeln 114, die ebenfalls kranzförmig unter der Bildung von Leitschaufelreihen an einem Leitschaufelträger 116 der Turbineneinheit 106 befestigt sind. Die Laufschaufeln 112 dienen dabei zum Antrieb der Turbinenwelle 108 durch Impulsübertrag vom die Turbineneinheit 106 durchströmenden Arbeitsmedium M. Die Leitschaufeln 114 dienen hingegen zur Strömungsführung des Arbeitsmediums M zwischen jeweils zwei in Strömungsrichtung des Arbeitsmediums M gesehen aufeinander folgenden Laufschaufelreihen oder Laufschaufelkränzen. Ein aufeinander folgendes Paar aus einem Kranz von Leitschaufeln 114 oder einer Leitschaufelreihe und aus einem Kranz von Laufschaufeln 112 oder einer Laufschaufelreihe wird dabei auch als Turbinenstufe bezeichnet.

Jede Leitschaufel 114 weist eine Plattform 118 auf, die zur Fixierung der jeweiligen Leitschaufel 114 an einem Leitschaufelträger 116 der Turbineneinheit 106 als Wandelement angeordnet ist. Die Plattform 118 ist dabei ein thermisch vergleichsweise stark belastetes Bauteil, das die äußere Begrenzung eines Heißgaskanals für das die Turbineneinheit 106 durchströmende Arbeitsmedium M bildet. Jede Laufschaufel 112 ist in analoger Weise über eine auch als Schaufelfuß bezeichnete Plattform 119 an der Turbinenwelle 108 befestigt.

Zwischen den beabstandet voneinander angeordneten Plattformen 118 der Leitschaufeln 114 zweier benachbarter Leitschaufelreihen ist jeweils ein Ringsegment 121 an einem Leitschaufelträger 1 der Turbineneinheit 106 angeordnet. Die äußere Oberfläche jedes Ringsegments 121 ist dabei ebenfalls dem heißen, die Turbineneinheit 106 durchströmenden Arbeitsmedium M ausgesetzt und in radialer Richtung vom äußeren Ende der ihm gegenüber liegenden Laufschaufeln 112 durch einen Spalt beabstandet. Die zwischen benachbarten Leitschaufelreihen angeordneten Ringsegmente 121 dienen dabei insbesondere als Abdeckelemente, die das Innengehäuse im Leitschaufelträger 116 oder andere Gehäuse-Einbauteile vor einer thermischen Überbeanspruchung durch das die Turbine 106 durchströmende heiße Arbeitsmedium M schützen.

Die Brennkammer 104 ist im Ausführungsbeispiel als so genannte Ringbrennkammer ausgestaltet, bei der eine Vielzahl von in Umfangsrichtung um die Turbinenwelle 108 herum angeordneten Brennern 110 in einen gemeinsamen Brennkammerraum münden. Dazu ist die Brennkammer 104 in ihrer Gesamtheit als ringförmige Struktur ausgestaltet, die um die Turbinenwelle 108 herum positioniert ist.

## Patentansprüche

1. Eine in eine hohle, gekühlte Turbinenschaufel einsetzbare Kühlmittelüberbrückungsleitung (1) für eine Gasturbine (101) mit durch eine Wandung (2) getrennte Innen- und Außenseiten (4, 6),
wobei sich die Kühlmittelüberbrückungsleitung (1) von einem ersten Bauteil der Gasturbine (101) zu einem zweiten Bauteil der Gasturbine (101) erstreckt, und
wobei die Kühlmittelüberbrückungsleitung (1) Mittel (8, 12) aufweist, die die Wärmeübertragung zwischen Innen- und Außenseite (4, 6) verändern, vorzugsweise auch die Strömungsverhältnisse an Innen- und Außenseite verändern, **dadurch gekennzeichnet, dass** die die Wärmeübertragung zwischen Innen- und Außenseite (4, 6) verändernden Mittel (8, 12) die Wärmeleitung zwischen Innen- und Außenseite verändern, und eine Beschichtung mit einem keramischen Material umfassen.

2. Kühlmittelüberbrückungsleitung (1) nach Anspruch 1,
die innerhalb einer Leitschaufel (114) der Gasturbine (101) angeordnet ist.

3. Kühlmittelüberbrückungsleitung (1) nach Anspruch 2,
bei der das erste Bauteil ein Schaufelfuß oder ein Schaufelkopf und das zweite Bauteil ein Schaufelkopf oder ein Schaufelfuß ist.

4. Kühlmittelüberbrückungsleitung (1) nach einem der vorhergehenden Ansprüche,
bei dem die Mittel (8, 12) Turbulatoren (8) umfassen.

5. Kühlmittelüberbrückungsleitung (1) nach einem der vorhergehenden Ansprüche,
bei der die Mittel (8, 12) eine Anzahl von Öffnungen (12) in der Wandung (2) umfassen.

6. Kühlmittelüberbrückungsleitung (1) nach einem der vorhergehenden Ansprüche,
bei der als Mittel (8, 12) die Wandung (2) hohl ausgebildet ist.

7. Kühlmittelüberbrückungsleitung (1) nach Anspruch 6,
bei dem der Hohlraum (7) der Wandung (2) gegenüber der Innenseite (4) und der Außenseite (6) hermetisch gekapselt ist.

8. Kühlmittelüberbrückungsleitung (1) nach Anspruch 7,
bei dem im Betrieb im Hohlraum (7) ein geringerer Druck herrscht als ein durchschnittlicher atmosphärischer Druck.

9. Kühlmittelüberbrückungsleitung (1) nach einem der Ansprüche 1 bis 8,
welche zur Führung eines Kühlmittels im Inneren rohrförmig ausgebildet ist.

10. Turbinenleitschaufel mit einem hohlen Schaufelblatt, in dem eine Kühlmittelüberbrückungsleitung (1) nach einem der vorangehenden Ansprüche angeordnet ist.

11. Gasturbine (101) mit einer Turbinenleitschaufel nach Anspruch 10.

12. Kraftwerksanlage mit einer Gasturbine (101) nach Anspruch 11.

## Claims

1. Coolant bridging line (1) for a gas turbine (101), which coolant bridging line can be inserted into a hollow, cooled turbine blade and has inner and outer sides (4, 6) separated by a wall (2),
wherein the coolant bridging line (1) extends from a first component of the gas turbine (101) to a second component of the gas turbine (101), and
wherein the coolant bridging line (1) has means (8, 12) which change the heat transfer between the inner and outer sides (4, 6), preferably also change the flow conditions at the inner and outer sides,
**characterized in that**
the means (8, 12) which change the heat transfer between the inner and outer sides (4, 6) change the thermal conduction between the inner and outer sides, and comprise a coating with a ceramic material.

2. Coolant bridging line (1) according to Claim 1,
which is arranged within a guide blade (114) of the gas turbine (101).

3. Coolant bridging line (1) according to Claim 2,
in which the first component is a blade root or a blade head and the second component is a blade head or a blade root.

4. Coolant bridging line (1) according to one of the preceding claims,
in which the means (8, 12) comprise turbulators (8).

5. Coolant bridging line (1) according to one of the preceding claims,
in which the means (8, 12) comprise a number of openings (12) in the wall (2).

6. Coolant bridging line (1) according to one of the preceding claims,
in which, as the means (8, 12), the wall (2) is of hollow design.

7. Coolant bridging line (1) according to Claim 6,
in which the cavity (7) of the wall (2) is hermetically sealed with respect to the inner side (4) and the outer side (6).

8. Coolant bridging line (1) according to Claim 7,
in which the pressure within the cavity (7) during operation is lower than an average atmospheric pressure.

9. Coolant bridging line (1) according to one of Claims 1 to 8,
which, for the purpose of conveying a coolant, is of tubular internal design.

10. Turbine guide blade having a hollow blade airfoil, within
which a coolant bridging line (1) according to one of the preceding claims is arranged.

11. Gas turbine (101) having a turbine guide blade according to Claim 10.

12. Power plant installation having a gas turbine (101) according to Claim 11.

## Revendications

1. Conduit (1) de pontage pour fluide de refroidissement pour une turbine (101) à gaz, pouvant être utilisé dans une aube de turbine creuse et refroidie et ayant des faces (4, 6) intérieure et extérieure séparées par une paroi (2), dans lequel le conduit (1) de pontage pour fluide de refroidissement s'étend d'un premier élément de la turbine (101) à gaz à un deuxième élément de la turbine (101) à gaz et
dans lequel le conduit (1) de pontage pour fluide de refroidissement a des moyens (8, 12), qui modifient la transmission de la chaleur entre les faces (4, 6) intérieure et extérieure, en modifiant aussi, de préférence, les conditions d'écoulement sur les faces intérieure et extérieure,
**caractérisé en ce que** les moyens (8, 12), modifiant la transmission de la chaleur entre les faces (4, 6) intérieure et extérieure, modifient la conduction de la chaleur entre les faces intérieure et extérieure et comprennent un revêtement en un matériau céramique.

2. Conduit (1) de pontage pour fluide de refroidissement suivant la revendication 1,
qui est disposé à l'intérieure d'une aube (114) directrice de la turbine (101) à gaz.

3. Conduit (1) de pontage pour fluide de refroidissement suivant la revendication 2,
dans lequel le premier élément est une emplanture d'aube ou une tête d'aube, et le deuxième élément, une tête d'aube ou une emplanture d'aube.

4. Conduit (1) de pontage pour fluide de refroidissement suivant l'une des revendications précédentes,
dans lequel les moyens (8, 12) comprennent des dispositifs (8) de mise en turbulence.

5. Conduit (1) de pontage pour fluide de refroidissement suivant l'une des revendications précédentes,
dans lequel les moyens (8, 12) comprennent un certain nombre d'ouvertures (12) dans la paroi (2).

6. Conduit (1) de pontage pour fluide de refroidissement suivant l'une des revendications précédentes,
dans lequel, en tant que moyens (8, 12), la paroi est constituée en étant creuse.

7. Conduit (1) de pontage pour fluide de refroidissement suivant la revendication 6,
dans lequel la cavité (7) de la paroi (2) est hermétique par rapport à la face (4) intérieure et la face (6) extérieure.

8. Conduit (1) de pontage pour fluide de refroidissement suivant la revendication 7,
**caractérisé en ce qu'**en fonctionnement, règne dans la cavité (7) une pression plus petite qu'une pression atmosphérique moyenne.

9. Conduit (1) de pontage pour fluide de refroidissement suivant l'une des revendications 1 à 8,
qui est constitué de manière tubulaire pour conduire un fluide de refroidissement à l'intérieur.

10. Aube directrice de turbine ayant une lame d'aube creuse, dans laquelle est disposé un conduit (1) de pontage pour fluide de refroidissement suivant l'une des revendications précédentes.

11. Turbine (101) à gaz ayant une aube directrice de turbine suivant la revendication 10.

12. Centrale électrique ayant une turbine (101) à gaz suivant la revendication 11.
